# EUROPÄISCHE PATENTSCHRIFT

(11) **EP 1 694 546 B1**
(45) Veröffentlichungstag und Bekanntmachung des Hinweises auf die Patenterteilung: **08.09.2010**
(21) Anmeldenummer: 03782339.0
(22) Anmeldetag: 09.12.2003
(51) Int. Cl.: B60T 11/10, B60K 23/04, F16D 25/0638, F16J 15/16, B60W 10/02, B60W 10/10, B60W 10/18

(54) **HYDRAULIKSYSTEM**
HYDRAULIC SYSTEM
SYSTEME HYDRAULIQUE

(43) Veröffentlichungstag der Anmeldung: 30.08.2006
(73) Patentinhaber: GKN Driveline International GmbH, 53797 Lohmar (DE)
(72) Erfinder: GRUNWALD, Artur, 51588 Nümbrecht (DE); GASSMANN, Theodor, 53721 Siegburg (DE); GÖRLICH, Horst, 50321 Brühl-Badorf (DE); CARRÉ, Jean-Jacques, F-93340 Le Raincy (FR)
(74) Vertreter: Oberwalleney, Stephan
(86) Internationale Anmeldenummer: PCT/EP2003/013929
(87) Internationale Veröffentlichungsnummer: WO 2005/063542

(56) Entgegenhaltungen:
- EP-A- 0 462 080
- WO-A-93/16903
- DE-A- 3 430 982
- DE-A- 19 816 069
- GB-A- 2 273 541
- US-A- 3 917 013
- US-B1- 6 641 503

## Beschreibung

Die Erfindung betrifft ein Hydrauliksystem in einem Kraftfahrzeug, das einen primären Hydraulikkreis mit einer Pumpe umfaßt, die einen geregelten Vordruck erzeugt, wobei an den Hydraulikkreis zumindest ein primärer Stell- oder Servozylinder angeschlossen ist, der auf kraftbetätigte Baugruppen einwirkt. Hydraulikkreise mit von einem Elektromotor oder von der Brennkraftmaschine angetriebenen Pumpen stehen beispielsweise für die Baugruppen Bremsanlage, hydraulisch betätigte Schaltgetriebe oder hydraulische Servolenkung im Kraftfahrzeug zur Verfügung. Die Hydraulikkreise schließen hierbei in der Regel Druckspeicherelemente ein, damit ein hoher Vordruck unabhängig vom Pumpenantrieb ständig zur Verfügung steht.

Weitere Baugruppen, die einen Hydraulikkreis zur kraftbetätigten Verstellung benötigen, stellen die Sperrkuppungen in Differentialgetrieben oder die Zuschaltkupplung für eine bedarfsweise antreibbare Antriebsachse dar. Der hierfür erforderliche Hydraulikkreis mit von einem Elektromotor angetriebener Pumpe stellt einen wesentlichen Kostenfaktor in diesen Baugruppen dar. Im übrigen erhöhen die zusätzlichen Hilfsaggregate Elektromotor und Pumpe das Fahrzeuggewicht und den Energieverbrauch.

Aus der DE 34 30 982 A1 ist eine Anordnung zur Regelung des Antriebsschlupfes für Kraftfahrzeuge bekannt. Um das Fahrverhalten bei ungünstigen Straßenverhältnissen zu verbessern, ist ein sperrbares Differentialgetriebe im Antriebsstrang des Kraftfahrzeugs integriert. Es sind mehrere Hydraulikkreise vorgesehen, wobei eine Hydraulikpumpe sowohl die Bremsanlage als auch die Schlupfregelung in dem sperrbaren Differentialgetriebe mit Hydraulikdruck versorgt.

Der vorliegenden Erfindung liegt die Aufgabe zugrunde, vereinfachte und verbilligt aufgebaute Hydrauliksysteme in Kraftfahrzeugen zur Verfügung zu stellen, bei denen eine gute Abdichtung der Flüssigkeitssysteme gewährleistet ist.

Die Lösung hierfür besteht in einem Hydrauliksystem in einem Kraftfahrzeug, umfassend einen primären Hydraulikkreis mit einer Pumpe zur Erzeugung eines geregelten Vordruckes, an den zumindest ein primärer Stell- oder Servozylinder angeschlossen ist, der auf kraftbetätigte Baugruppen einwirkt; sowie ein sekundärer Hydraulikkreis, der an den primären Hydraulikkreis angeschlossen ist und Druckregelventile, einen Drucksensor sowie zumindest einen sekundären Stellzylinder umfaßt, der auf eine Reibungskupplung im Antriebsstrang des Kraftfahrzeuges einwirkt; die Reibungskupplung ist eine ölgefüllte Lamellenkupplung, wobei eine Abdichtung der verschiedenen Flüssigkeitssysteme mittels der kennzeichnenden Merkmalen der Ansprüche 1 oder 2 erfolgt.

Mit dem erfindungsgemäßen Hydrauliksystem kann beispielsweise der vorhandene Hydraulikkreis einer elektrohydraulischen Bremsanlage (EHB) bzw. einer über einen Bremseneingriff wirkenden Traktionskontrolle (TC) herangezogen werden, um die hydraulische Kraftverstellung einer Reibungskupplung im Fahrzeugantriebsstrang bei geringem zusätzlichen Bauaufwand ebenfalls zu bewirken. Der vorhandene primäre Hydraulikkreis umfaßt im wesentlichen einen Elektromotor, eine Pumpe und einen Druckspeicher sowie entsprechende Steuerventile an den Stell- oder Servozylindern. Für die erfindungsgemäße Druckversorgung und Ansteuerung der Reibungskupplung sind im wesentlichen nur zusätzliche Anschlüsse im Vorlauf und im Rücklauf des primären Hydraulikkreises für den sekundären Hydraulikkreis erforderlich, der zwei Steuerventile und einen Drucksensor umfaßt. Der Kolben des Stellzylinders für die Reibungskupplung wird mit hydraulischem Druck des Hydraulikmediums im sekundären Hydraulikkreis unmittelbar oder mittelbar beaufschlagt und drückt das Lamellenpaket der Reibungskupplung zusammen, wodurch die entsprechende Funktion bewirkt wird, z. B. das Sperren des Differentialgetriebes oder das Ankuppeln der bedarfsweise anzutreibenden Achse. Zur Darstellung eines geschlossenen Regelkreises wird vorzugsweise ein Drucksensor am hydraulischen Stellzylinder angeordnet.

Der primäre Hydraulikkreis und der sekundäre Hydraulikkreis sind offen verbunden und haben ein einheitliches Medium. Da die Druckflüssigkeit im vorhandenen primären Hydraulikkreis und damit auch im sekundären Hydraulikkreis in der Regel Bremsflüssigkeit ist, während die Reibungskupplung mit Automatikgetriebeflüssigkeit (ATF, Automatic Transmission Fluid) arbeitet, werden verschiedene Vorschläge gemacht, um eine gegenseitige Abdichtung der verschiedenen Flüssigkeitssysteme zu erreichen, die nachstehend erläutert werden.

Eine erste Möglichkeit besteht darin, daß der Kolben des sekundären Stellzylinders das Hydraulikfluid im sekundären Hydraulikkreis gegen die Ölfüllung der Lamellenkupplung abdichtet. Das heißt hiernach, daß die Abdichtung im Stellzylinder selber erfolgt, wobei der Kolben die Systemgrenze bildet. Eine andere Möglichkeit besteht darin, daß ein Übertragerzylinder zwischen dem sekundären Hydraulikkreis und dem sekundären Stellzylinder vorgesehen ist und daß ein Kolben im Übertragerzylinder das Hydraulikfluid im Hydraulikkreis gegen ein auf den Kolben des sekundären Stellzylinders einwirkendes Übertragermedium, insbesondere Öl, abdichtet, das auf den Kolben des sekundären Stellzylinders einwirkt. Hierbei kann gegebenenfalls zwischen dem sekundären Hydraulikkreis und der Ölfüllung der Lamellenkupplung noch ein drittes neutrales Medium eingesetzt werden. In der Regel ist jedoch der Kolben im Übertragerzylinder die Systemgrenze zwischen den beiden Flüssigkeiten.

Vorzugsweise gilt, daß der als Ringkolben ausgebildete Kolben des Stellzylinders zwei Gruppen von Dichtungen trägt, von denen die eine an Hydraulikfluid und die andere an die Ölfüllung der Lamellenkupplung angepaßt ist. Im Falle des zylindrischen Kolbens des Übertragerzylinders sind entsprechend nur zwei Dichtringe erforderlich. Zwischen den Dichtungen kann jeweils noch ein Ringraum mit einem neutralen Dichtungsmedium vorgesehen sein. Die genannte Anpassung kann Werkstoffe und Toleranzen betreffen. Der Kolben des Übertragerzylinders kann zur Druckübersetzung als Stufenkolben ausgebildet sein.

Eine andere Lösung besteht darin, daß im sekundären Stellzylinder eine elastische Membran angeordnet ist, die das Hydraulikfluid im sekundären Hydraulikkreis gegen ein auf den Kolben des sekundären Stellzylinders einwirkendes Übertragermedium, insbesondere Öl, abdichtet. Alternativ hierzu ist es möglich, daß ein Übertragerzylinder zwischen dem Hydraulikkreis und dem sekundären Stellzylinder vorgesehen ist und daß im Übertragerzylinder eine elastische Membran angeordnet ist, die das Hydraulikfluid im sekundären Hydraulikkreis gegen ein auf den Kolben im sekundären Stellzylinder einwirkendes Übertragermedium, insbesondere Öl, abdichtet.

Hiermit werden an der Systemgrenze zwischen den beiden Flüssigkeitssystemen gleitende Dichtungen vermieden, so daß keine Leckverluste und keine Kupplungsölverdünnung auftreten kann. In bevorzugter Ausgestaltung sind hierbei die genannten Membranen aus zwei verschiedenen Lagen aufgebaut, von denen jede in ihrer Spezifikation an die anstehende Flüssigkeit angepaßt ist. Dies bezieht sich hierbei in ererster Linie auf die Werkstoffauswahl.

In den erfindungsgemäßen Hydrauliksystemen wird für die ölgefüllten Lamellenkupplungen mit einem hydraulischen Stellzylinder folgendes vorgeschlagen. Die ölgefüllten Lamellenkupplungen zeichnen sich gemäß einer ersten Ausführungsform dadurch aus, daß der Kolben im Stellzylinder zwei Gruppen von Dichtringen mit unterschiedlicher Spezifikation trägt, von denen die kupplungsseitigen Dichtringe an Öl und die hydraulikseitigen Dichtringen an Hydraulikflüssigkeit angepaßt sind;
nach einer zweiten Ausführungsform dadurch, daß mit dem Stellzylinder ein Übertragerzylinder hydraulisch verbunden ist und daß der Kolben im Übertragerzylinder zwei Dichtringe mit unterschiedlicher Spezifikation trägt, von denen der stellzylinderseitige Dichtring an ein Übertragermedium, insbesondere Öl, und der hydraulikkreisseitige Dichtring an Hydraulikflüssigkeit anpaßt ist;
nach einer dritten Ausführungsform dadurch, daß im Stellzylinder eine elastische Membran angeordnet ist, die das Hydraulikfluid im sekundären Hydraulikkreis gegen ein auf den Kolben im Stellzylinder einwirkendes Übertragermedium, insbesondere Öl abdichtet;
und nach einer vierten Ausführungsform, daß ein Übertragerzylinder mit dem Stellzylinder hydraulisch verbunden ist und daß im Übertragerzylinder eine elastische Membran angeordnet ist, die das Hydraulikfluid im sekundären Hydraulikkreis gegen ein auf den Kolben im Stellzylinder einwirkendes Übertragermediun, insbesondere Öl abdichtet.

Auch hier sind die Dichtungsmittel in Formgebung und Material an die Medien angepaßt, mit denen sie in Kontakt stehen.

Bevorzugte Ausführungsbeispiele der Erfindung sind in den Zeichnungen dargestellt und werden nachstehend anhand der Figuren beschrieben.
- Figur 1: zeigt ein erfindungsgemäßes Hydrauliksystem, bei dem primäre Stellzylinder von Bremszylindern gebildet werden und ein sekundärer Stellzylinder in eine Lamellenkupplung für den Antriebsstrang eines Kraftfahrzeugs integriert ist, in einer ersten Ausführung;
- Figur 2: zeigt ein erfindungsgemäßes Hydrauliksystem, bei dem primäre Stellzylinder von Bremszylindern gebildet werden und ein sekundärer Stellzylinder in eine Lamellenkupplung für den Antriebsstrang eines Kraftfahrzeugs integriert ist, in einer zweiten Ausführung;
- Figur 3: zeigt eine Lamellenkupplung mit einem sekundären Stellzylinder für ein Hy- drauliksystem nach den Figuren 1 und 2 in einer ersten Ausführung;
- Figur 4: zeigt eine Lamellenkupplung mit einem sekundären Stellzylinder für ein Hy- drauliksystem nach den Figuren 1 und 2 in einer zweiten Ausführung;
- Figur 5: zeigt eine Lamellenkupplung mit einem sekundären Stellzylinder für ein Hy- drauliksystem nach den Figuren 1 und 2 in einer dritten Ausführung;
- Figur 6: zeigt eine Lamellenkupplung mit einem sekundären Stellzylinder für ein Hy- drauliksystem nach den Figuren 1 und 2 in einer vierten Ausführung;
- Figur 7: zeigt eine Lamellenkupplung mit einem sekundären Stellzylinder für ein Hy- drauliksystem nach den Figuren 1 und 2 in einer fünften Ausführung;
- Figur 8: zeigt eine Lamellenkupplung mit einem sekundären Stellzylinder für ein Hy- drauliksystem nach den Figuren 1 und 2 in einer sechsten Ausführung.

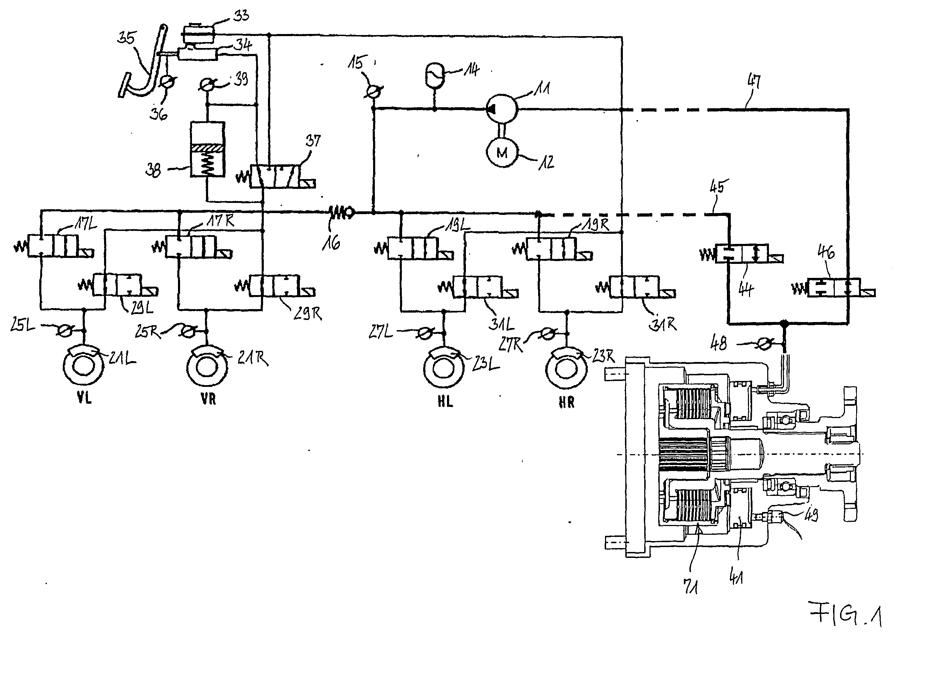

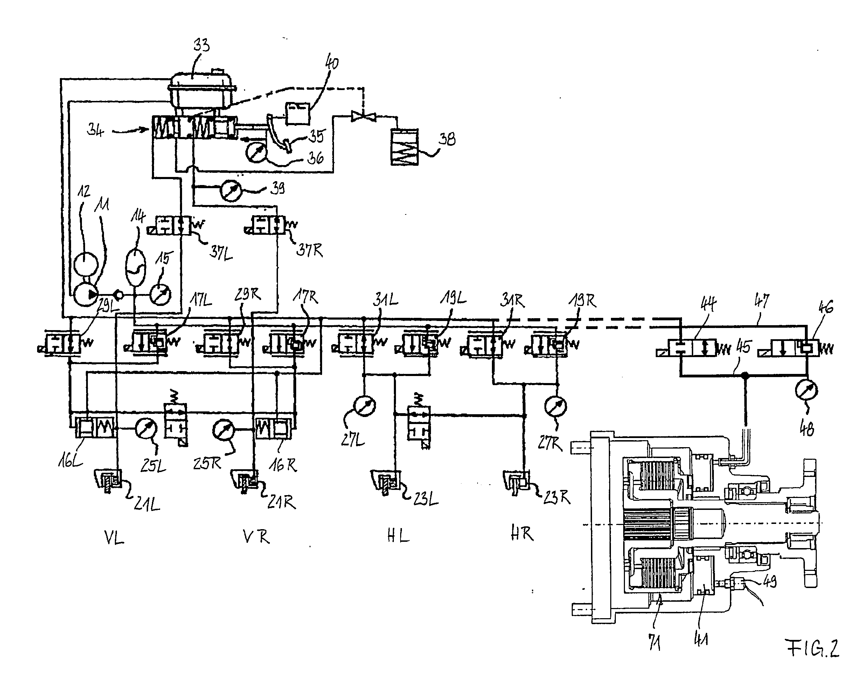

In Figur 1 ist ein erfindungsgemäßes Hydrauliksystem gezeigt, dessen Grundschema aus der U.S. 6,158,825 bekannt ist. In Figur 2 ist ein erfindungsgemäßes Hydrauliksystem gezeigt, dessen Grundschema aus der DE 698 05 851 T2 bekannt ist. Die Figuren 1 und 2 werden nachfolgend zunächst gemeinsam beschrieben. Das Hydrauliksystem wird im normalen Betrieb mit Fremdenergie betrieben, während es im Notbetrieb mit vom Fahrer erzeugter Bremspedalkraft betrieben wird. Alle gezeigten Ventilstellungen entsprechen der letztgenannten Betriebsart, während für die normale Betriebsart jeweils die andere Stellung der Steuerventile anzunehmen ist, die sämtlich als 2/2-Wegeventile ausgebildet sind.

Eine Pumpe 11 wird von einem Elektromotor 12 angetrieben, wobei der Pumpe 12 ein Druckspeicher 14 und ein Drucksensor 15 nachgeordnet ist. Der Druck im Druckspeicher 14 beaufschlagt Steuerventile 17R, 17L im Vorlauf zu den Bremszylindern 21 L, 21 R einer linken Vorderradbremse VL und einer rechten Vorderradbremse VR sowie Steuerventile 19L, 19R im Vorlauf zu den Bremszylindern 23L, 23R einer linken Hinterradbremse HL und einer rechten Hinterradbremse HR. An jedem der Bremszylinder 21 L, 21 R, 23L, 23R ist ein Drucksensor 25L, 25R, 27L, 27R angeordnet. Im Rücklauf von den Bremszylindern der Vorderradbremsen befinden sich weitere Steuerventile 29L, 29R; im Rücklauf von den Bremszylindern der Hinterradbremsen befinden sich weitere Steuerventile 31L, 31R. Hierbei sind die Rückläufe mit einem Reservoir 33 verbunden. Aus dem Reservoir 33 speist sich die Pumpe 11 ebenso wie ein Hauptbremszylinder 34, der von einem Bremspedal 35 betätigt werden kann und an dem ein Wegaufnehmer 36 angebracht ist. Im Normalbetrieb ist der Hauptbremszylinder 34 durch ein Sicherheitsventil 37 (Figur 1) bzw. durch zwei Sicherheitsventile 37L, 37R (Figur 2) von den zuvor genannten Steuerventilen getrennt. Dabei arbeitet der Hauptbremszylinder 34 ausschließlich gegen einen Pedaldrucksimulator 38, an dem ein Drucksensor 39 angeordnet ist. Je nach Pedalstellung gemäß Wegaufnehmer 36 bzw. Pedaldruck gemäß Drucksensor 39 oder Lastsensor 40 werden die Steuerventile rechnergesteuert geöffnet und geschlossen, insbesondere frequenzmoduliert, wobei der Arbeitsdruck vom Druckspeicher 14 stammt und die Pumpe 11 bedarfsweise angetrieben wird. An den primären Hydraulikkreis mit dem Druckspeicher 14 und dem Reservoir 33 ist über gestrichelt gezeichnete Verbindungsleitungen ein sekundärer Hydraulikkreis mit einem Stellzylinder 41 für eine Lamellenkupplung 71 im Antriebsstrang des Fahrzeuges angeschlossen, wobei im Vorlauf 45 des sekundären Hydraulikkreises ein Steuerventil 44 und im Rücklauf 47 des sekundären Hydraulikkreises ein Steuerventil 46 angeordnet ist. Auch diese Ventile werden rechnergesteuert zur Betätigung des sekundären Stellzylinders 41 geöffnet und geschlossen, insbesondere frequenzmoduliert. Ein Drucksensor 48 kann in der Zuführung zum Stellzylinder 41 vorgesehen sein. Alternativ kann ein Drucksensor 49 unmittelbar am Stellzylinder 41 angeordnet sein.

Bei einem Systemfehler fallen die Ventile, insbesondere die Sicherheitsventile 37, in die in der Figur dargestellte Position. Hierdurch wirkt nach Figur 1 der Hauptbremszylinder direkt über die stromlos geöffneten Steuerventile 29L, 29R bei stromlos geschlossenen Steuerventilen 17L, 17R auf die Bremszylinder 21 L, 21 R der Vorderradbremsen VL, VR. Durch die Wirkung des Rückschlagventils 16 wird eine Beaufschlagung der Hinterradbremsen HL, HR ausgeschlossen. In gleicher Weise ist eine Betätigung des sekundären Stellzylinders 41 nicht erwünscht und wird ebenfalls verhindert. Hiermit wird im Notbetrieb die Wirkung der Vorderradbremsen mit Pedalkraft erhalten. In Figur 2 wird auf ähnliche Weise bei einem Systemausfall im Notbetrieb der Hauptbremszylinder 34 über die Sicherheitsventile 37L, 37R mit den primären Stellzylindern 21 L, 21 R der Vorderräder VL, VR verbunden, wobei sämtliche im Vorlauf liegenden Steuerventile 17L, 17R, 19L, 19R geschlossen sind und sämtliche im Rücklauf liegenden Ventile 29L, 29R, 31 L, 31 R geöffnet sind. Üblicherweise im Vorlauf liegende Rückschlagventile 16L, 16R verhindern gleichzeitig eine Druckversorgung der Stellzylinder 23L, 23R der Hinterradbremsen HL, HR und eine Druckversorgung des sekundären Stellzylinders 41 der Lamellenkupplung 71.

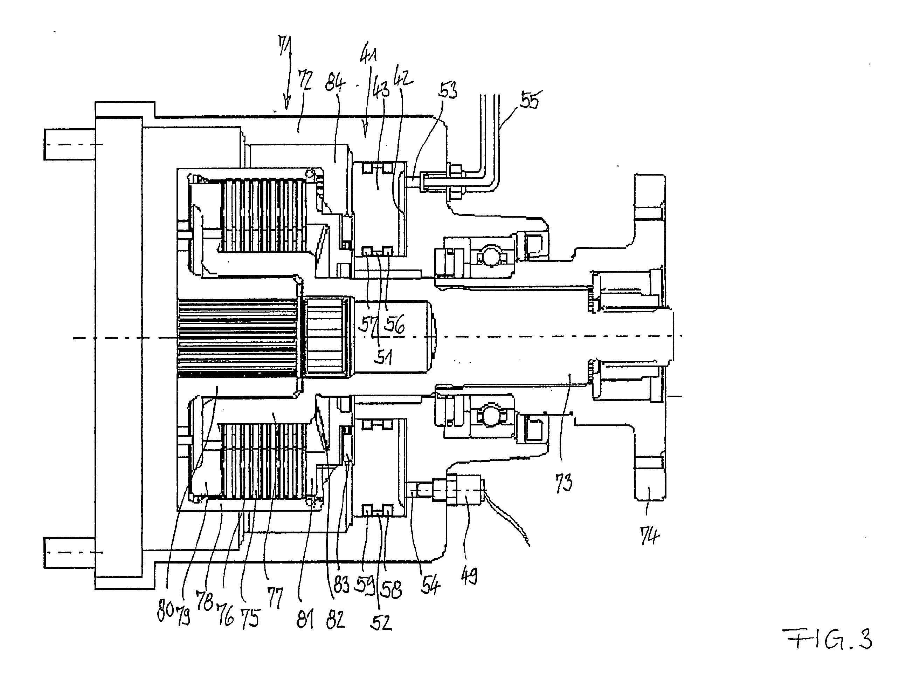

Die Figuren 3 bis 7 werden zunächst gemeinsam beschrieben. Es ist jeweils eine Lamellenkupplung 71 mit einem sekundären Stellzylinder 41 gemäß den vorausgehenden Figuren 1 und 2 als vergrößerte Einzelheit dargestellt. In einem Gehäuse 72 ist eine Eingangswelle 73 mit einem Flansch 74 drehbar gelagert, wobei die Eingangswelle die Kupplungsnabe 77 der Lamellenkupplung 71 trägt. Die Lamellenkupplung 71 umfaßt weiterhin einen Kupplungskorb 78, der mit einer Hohlwelle 80 verbunden werden kann, in die eine Ausgangswelle eingesteckt werden kann. Die abwechselnd als Innenlamellen 75 mit der Kupplungsnabe 77 und als Außenlamellen 76 mit dem Kupplungskorb 78 verbundenen Kupplungslamellen stützen sich an einem Flanschteil 79 der Kupplungsnabe 77 ab und werden von einer im Kupplungskorb 78 verschiebbaren Druckplatte 81 axial beaufschlagt. Druckplatte 81 und Kupplungsnabe 77 sind über eine Tellerfeder 82 axial gegeneinander abgestützt. Der Ringkolben 43 des sekundären Stellzylinders 41 wirkt über ein Axiallager 83 auf die Druckplatte 81 bei Druckbeaufschlagung mit Hydraulikmedium ein. Der Innenraum 84 der Lamellenkupplung 71 ist mit Automatikgetriebeflüssigkeit (ATF) gefüllt, das im weiteren als Ölfüllung bezeichnet wird.

In Figur 3 wird über eine Zuführleitung 55 und eine Gehäusebohrung 53 dem ringförmigen Zylinderraum 42 des Stellzylinders 41 unmittelbar Hydraulikfluid zugeführt. Der Ringkolben 43 ist über zwei Sätze von inneren Ringdichtungen 56, 57 und zwei Sätze von äußeren Ringdichtungen 58, 59 gegenüber dem ölgefüllten Innenraum 84 der Lamellenkupplung 71 abgedichtet. Am Ringzylinder 42 ist ein Drucksensor 49 über eine Gehäusebohrung 54 angeschlossen. Bei einer Druckaufgabe bei geöffnetem Steuerventil 44 und geschlossenem Steuerventil 46 wird der Ringkolben 43 in Richtung der Druckplatte 81 verschoben, so daß die Lamellenkupplung 71 geschlossen wird. Bei einer Druckentlastung bei geschlossenem Steuerventil 44 und geöffnetem Steuerventil 46 drückt die Tellerfeder 82 die Druckplatte 81 zurück gegen den Ringkolben 43, so daß die Lamellenkupplung 71 entlastet wird.

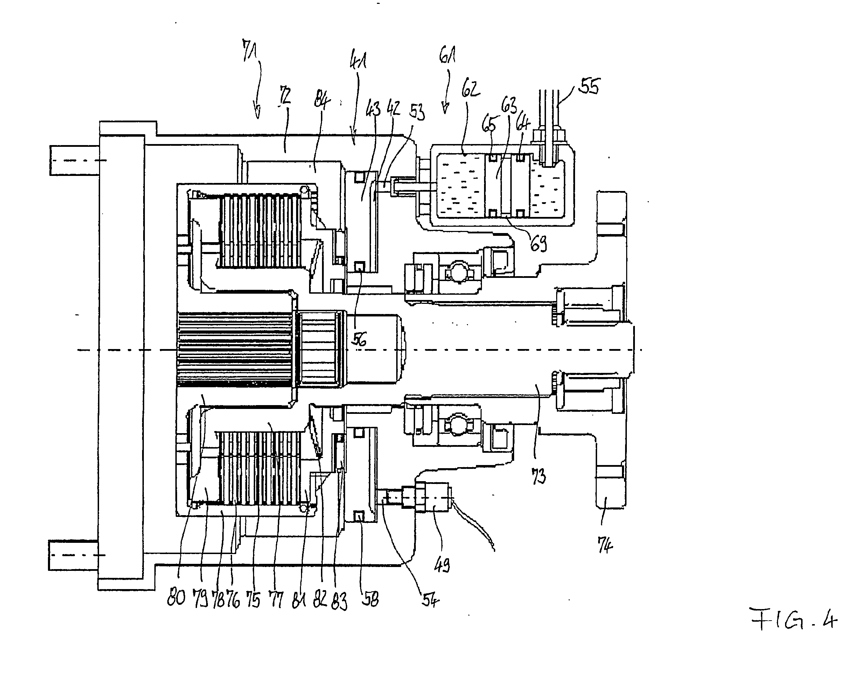

In Figur 4 ist abweichend von Figur 3 am Ringkolben 43 des Stellzylinders jeweils nur eine innere Ringdichtung 56 und eine äußere Ringdichtung 58 vorgesehen. Zwischen die Zuführleitung 55 und die Gehäusebohrung 53 ist ein Druckübertrager 61 eingesetzt, der eine Zylinderkammer 62 bildet, in der ein Trennkolben 63 axial verschiebbar angeordnet ist. Auf diesem Trennkolben 63 sitzen zwei Ringdichtungen 64, 65, von denen die erste an das Hydraulikfluid rechts vom Trennkolben 63 angepaßt ist und die andere an ein links vom Trennkolben befindliches Übertragermedium, das vorzugsweise mit dem Öl im Innenraum 84 der Lamellenkupplung 71 übereinstimmt. Zwischen den Dichtungen 64, 65 kann ein Dichtmedium 69 eingesetzt sein. Der Übertragerzylinder 61 überträgt den Druck in der Leitung 55 im wesentlichen unverändert über die Gehäusebohrung 53 auf den Zylinderraum 42 des Stellzylinders 41. Die Funktionsweise ist im übrigen wie zu Figur 3 beschrieben.

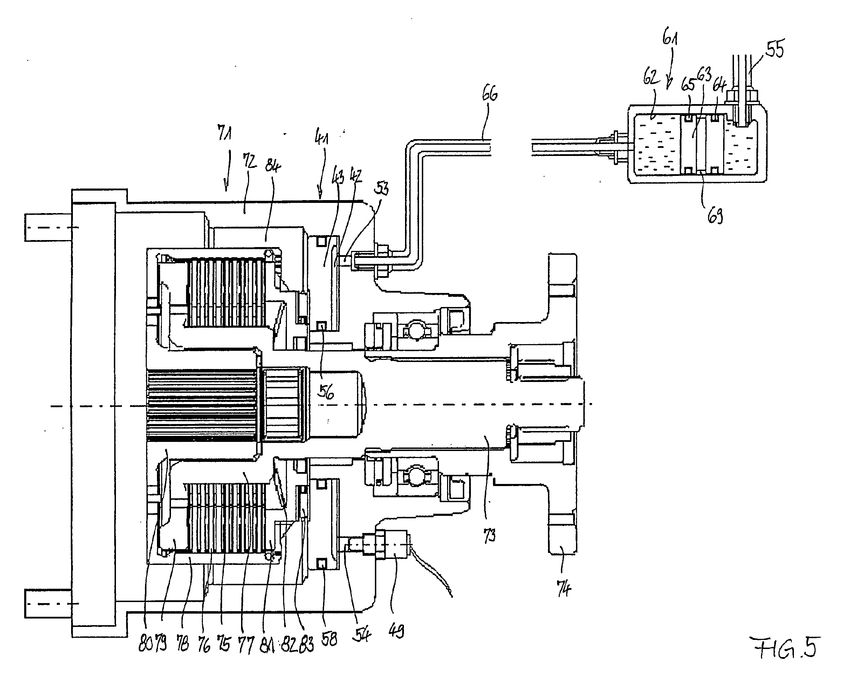

In Figur 5 ist abweichend von Figur 4 ein Übertragerzylinder 61 an die Zuführleitung 55 angeschlossen und räumlich vom Gehäuse getrennt. Der Übertragerzylinder 61 ist über eine Zwischenleitung 66 mit der Gehäusebohrung 53 verbunden. Im übrigen sind Aufbau und Funktion die gleichen wie in Figur 3, so daß insoweit auf die vorangehenden Beschreibungen Bezug genommen wird.

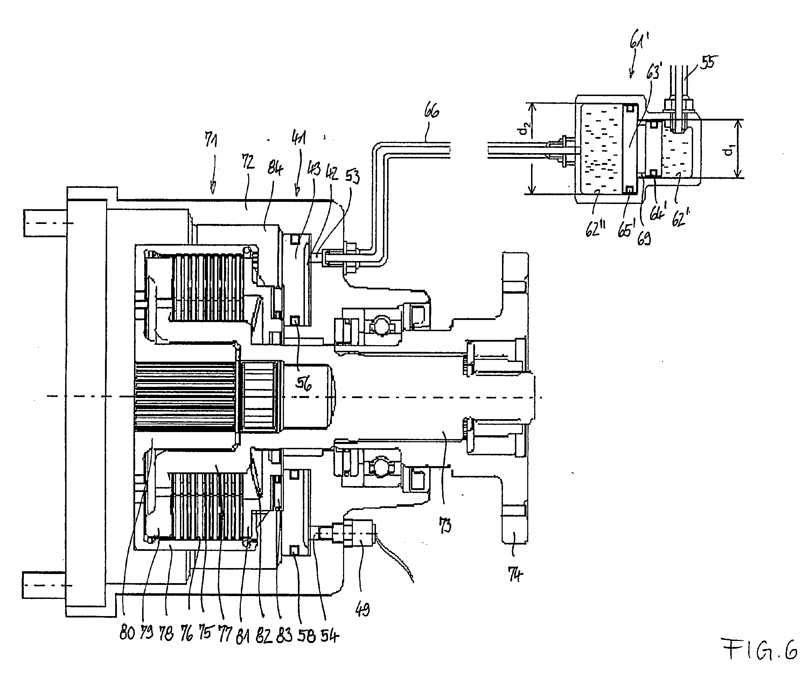

In Figur 6 ist abweichend von Figur 5 ein Übertragerzylinder 61' an die Zuführleitung 55 angeschlossen, der als Stufenzylinder ausgeführt ist. Hierbei gleitet ein Stufenkolben 63' in zwei Kammerabschnitten 61', 62", die voneinander unterschiedliche Wirkdurchmesser d₁, d₂ haben und damit im Übertragerzylinder eine Druckverstärkung bewirken. Im übrigen sind Aufbau und Funktion die gleichen wie in Figur 3, so daß insoweit auf die vorangehenden Beschreibungen Bezug genommen wird.

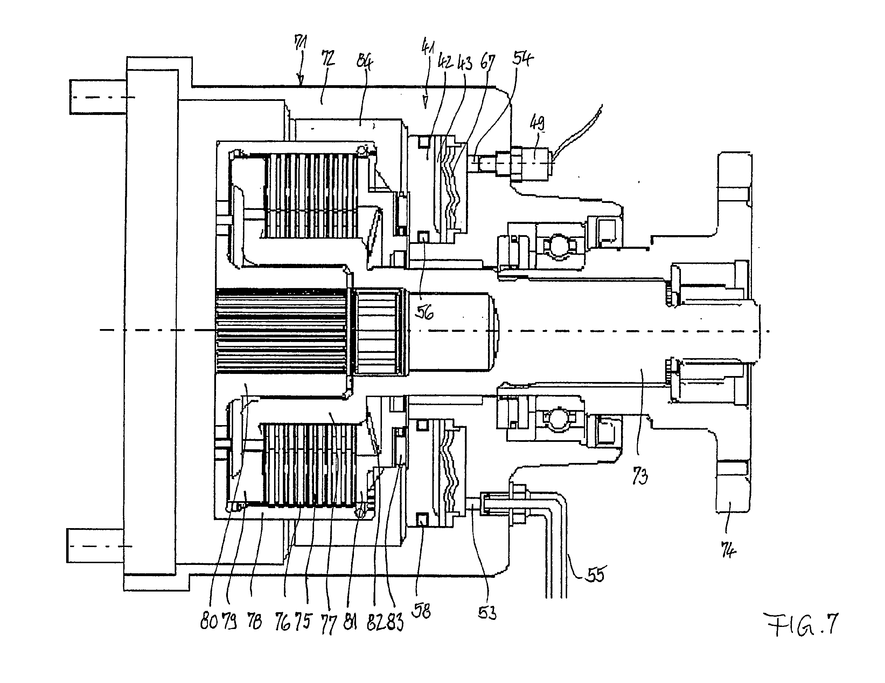

In Figur 7 ist eine Ausführung gezeigt, die weitgehend mit der in Figur 3 gezeigten übereinstimmt. Eine Zuführleitung 55 ist über eine Gehäusebohrung 53 mit dem Zylinderraum 42 des Stellzylinders 41 verbunden. Abweichend von Figur 3 weist der Ringkolben 43 hier nur eine innere Ringdichtung 56 und eine äußere Ringdichtung 58 auf. Innerhalb der Zylinderkammer 42 ist jedoch eine Ringmembran 67 abdichtend eingesetzt, die das Hydraulikfluid rechts von der Ringmembran vollständig von einem Übertragermedium links von der Ringmembran trennt, das auf den Ringkolben 43 einwirkt. Dieses Übertragermedium ist vorzugsweise übereinstimmend mit dem Öl im Innenraum 84 der Lamellenkupplung 71.

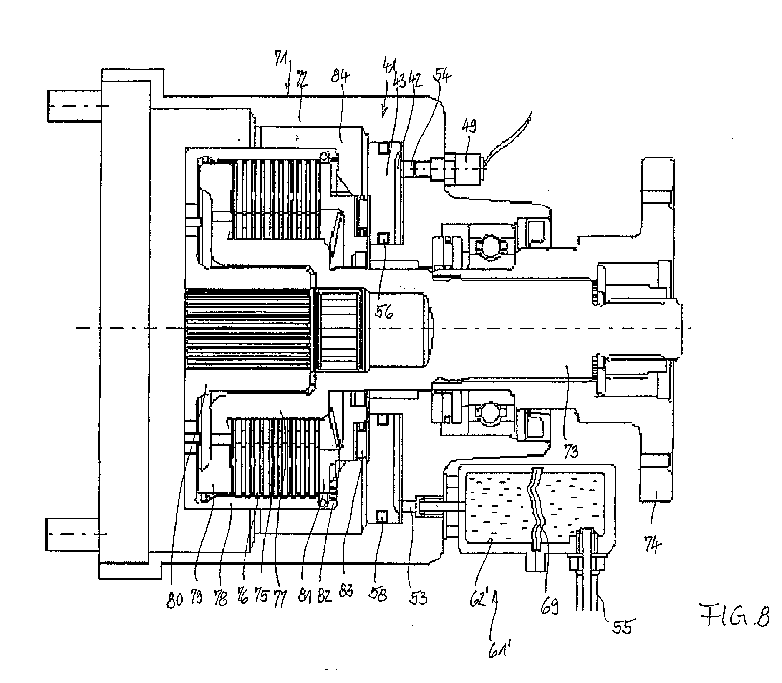

In Figur 8 ist bei weitgehender Übereinstimmung mit der Ausführung nach Figur 4 ein Druckübertrager 61' an das Gehäuse 72 angeschlossen, der über eine Gehäusebohrung 53 mit der Zylinderkammer 42 des Stellzylinders 41 verbunden ist. Abweichend von Figur 4 ist in die Zylinderkammer 62' des Druckübertragers 61' eine elastische Membran 69 abdichtend eingesetzt, die das rechts von der Membran befindliche Hydraulikfluid von einem links von der Membran befindlichen Übertragermedium hermetisch trennt, das auf den Ringkolben 43 des Stellzyinders 41 einwirkt. Dieses Übertragermedium ist auch hier bevorzugt übereinstimmend mit dem Öl im Innenraum 84 der Lamellenkupplung 71. Auch durch diese Art des Übertragers wird der Druck in der Zuführleitung 55 im wesentlichen verlustfrei über die Gehäusebohrung 53 auf die Zylinderkammer 42 des sekundären Stellzylinders 41 übertragen. Die Wirkung ist in allen Ausführungen jeweils in Abhängigkeit von der Ansteuerung der Steuerventile die gleiche wie zu Figur 3 beschrieben.

### Bezugszeichenliste

- 11: Pumpe
- 12: Elektromotor
- 13: -
- 14: Druckspeicher
- 15: Drucksensor
- 16: Rückschlagventil
- 17, 19: Steuerventile
- 21, 23: Bremszylinder
- 25,27: Drucksensoren
- 29, 31: Steuerventile
- 33: Reservoir
- 34: Hauptbremszylinder
- 35: Bremspedal
- 36: Wegaufnehmer
- 37: Sicherheitsventil
- 38: Pedaldrucksimulator
- 39: Drucksensor
- 40: Lastsensor
- 41: Stellzylinder
- 42: Zylinderkammer
- 43: Ringkolben
- 44: Steuerventil
- 45: Vorlauf
- 46: Steuerventil
- 47: Rücklauf
- 48: Drucksensor
- 49: Drucksensor

- 51: Dichtung
- 52: Dichtung
- 53: Bohrung
- 54: Bohrung
- 55: Zuführleitung
- 56: Ringdichtung
- 57: Ringdichtung
- 58: Ringdichtung
- 59: Ringdichtung

- 61: Druckübertrager
- 62: Zylinderkammer
- 63: Kolben
- 64: Ringdichtung
- 65: Ringdichtung
- 66: Zwischenleitung
- 67: Ringmembran
- 68: Membran
- 69: Dichtung

- 71: Lamellenkupplung
- 72: Gehäuse
- 73: Eingangswelle
- 74: Flansch
- 75: Innenlamellen
- 76: Außenlamellen
- 77: Kupplungsnabe
- 78: Kupplungskorb
- 79: Flansch
- 80: Hohlwelle
- 81: Druckplatte
- 82: Tellerfeder
- 83: Axiallager
- 84: Innenraum

## Patentansprüche

1. Hydrauliksystem in einem Kraftfahrzeug, umfassend einen primären Hydraulikkreis mit einer Pumpe (11) zur Erzeugung eines geregelten Vordruckes, an den zumindest ein primärer Stell- oder Servozylinder (21, 23) angeschlossen ist, der auf kraftbetätigte Baugruppen einwirkt, und einen sekundären Hydraulikkreis (45, 47), der an den primären Hydraulikkreis angeschlossen ist und Druckregelventile (44, 46) und zumindest einen sekundären Stellzylinder (41) mit einem Kolben (43) umfaßt, der auf eine Reibungskupplung (71) im Antriebsstrang des Kraftfahrzeuges einwirkt,
**dadurch gekennzeichnet,**
**daß** der sekundäre Hydraulikkreis (45, 47) einen Drucksensor (48, 49) umfaßt, daß die Reibungskupplung (71) eine ölgefüllte Lamellenkupplung ist, und
**daß** das Hydraulikmedium im sekundären Hydraulikkreis über den Kolben (43) des sekundären Stellzylinders (41) gegen die Ölfüllung der Lamellenkupplung (71), oder über eine im sekundären Stellzylinder (41) angeordnete elastische Membran (67) gegen ein auf den Kolben (43) des sekundären Stellzylinders (41) einwirkendes Übertragermedium abgedichtet ist.

2. Hydrauliksystem in einem Kraftfahrzeug, umfassend einen primären Hydraulikkreis mit einer Pumpe (11) zur Erzeugung eines geregelten Vordruckes, an den zumindest ein primärer Stell- oder Servozylinder (21, 23) angeschlossen ist, der auf kraftbetätigte Baugruppen einwirkt, und einen sekundären Hydraulikkreis (45, 47), der an den primären Hydraulikkreis angeschlossen ist und Druckregelventile (44, 46) und zumindest einen sekundären Stellzylinder (41) mit einem Kolben (43) umfaßt, der auf eine Reibungskupplung (71) im Antriebsstrang des Kraftfahrzeuges einwirkt,
**dadurch gekennzeichnet,**
**daß** der sekundäre Hydraulikkreis (45, 47) einen Drucksensor (48, 49) umfaßt, daß die Reibungskupplung (71) eine ölgefüllte Lamellenkupplung ist,
**daß** ein Übertragerzylinder (61) zwischen dem sekundären Hydraulikkreis und dem sekundären Stellzylinder (41) vorgesehen ist, und
**daß** ein Kolben (63) oder eine elastische Membran (69) im Übertragerzylinder (61) das Hydraulikmedium im sekundären Hydraulikkreis gegen ein auf den Kolben (43) des sekundären Stellzylinders (41) einwirkendes Übertragermedium abdichtet.

3. Hydrauliksystem nach einem der Ansprüche 1 oder 2,
**dadurch gekennzeichnet,**
**daß** der primäre Hydraulikkreis als kraftbetätigte Baugruppen Fahrzeugbremsen umfaßt.

4. Hydrauliksystem nach einem der Ansprüche 1 oder 2,
**dadurch gekennzeichnet,**
**daß** der primäre Hydraulikkreis als kraftbetätigte Baugruppen die Schaltwellen eines Fahrzeugschaltgetriebes umfaßt.

5. Hydrauliksystem nach einem der Ansprüche 1 oder 2,
**dadurch gekennzeichnet,**
**daß** der primäre Hydraulikkreis als kraftbetätigte Baugruppen Stellglieder einer aktiven Fahrwerkssteuerung umfaßt.

6. Hydrauliksystem nach einem der Ansprüche 1 oder 2,
**dadurch gekennzeichnet,**
**daß** der primäre Hydraulikkreis als kraftbetätigte Baugruppen Servoglieder eines Fahrzeuglenkgetriebes umfaßt.

7. Hydrauliksystem nach einem der Ansprüche 1 bis 6,
**dadurch gekennzeichnet,**
**daß** die Reibungskupplung (71) die Sperrkupplung eines Differentialgetriebes ist.

8. Hydrauliksystem nach einem der Ansprüche 1 bis 6,
**dadurch gekennzeichnet,**
**daß** die Reibungskupplung (71) eine Zuschaltkupplung (hang-on Kupplung) für eine bedarfsweise antreibbare Antriebsachse ist.

9. Hydrauliksystem nach einem der Ansprüche 1 bis 8,
**dadurch gekennzeichnet,**
**daß** der abdichtende Kolben (43, 63) zwei Gruppen von Dichtringen (56, 57, 58, 59) bzw. zwei Dichtringe (64, 65) unterschiedlicher Spezifikation trägt, die jeweils an das anstehende Medium angepaßt sind.

10. Hydrauliksystem nach einem der Ansprüche 1 bis 9,
**dadurch gekennzeichnet,**
**daß** der abdichtende Kolben ein Stufenkolben (63') ist.

11. Hydrauliksystem nach einem der Ansprüche 1 bis 10,
**dadurch gekennzeichnet,**
**daß** das Übertragermedium Öl ist.

12. Hydrauliksystem nach einem der Ansprüche 1 bis 11,
**dadurch gekennzeichnet,**
**daß** die elastische Membran (67, 69) aus zwei Lagen mit unterschiedlicher Spezifikation besteht, die jeweils an das anstehende Medium angepaßt sind.

13. Hydrauliksystem nach Anspruch 1,
**dadurch gekennzeichnet,**
**daß** der Kolben (43) im Stellzylinder (41) zwei Gruppen von Dichtringen (56, 57, 58, 59) mit unterschiedlicher Spezifikation trägt, von denen die kupplungsseitigen Dichtringe an Öl und die hydraulikkreisseitigen Dichtringe an Hydraulikflüssigkeit angepaßt sind.

14. Hydrauliksystem nach Anspruch 2,
**dadurch gekennzeichnet,**
**daß** der Übertragerzylinder (61) mit dem Stellzylinder (41) hydraulisch verbunden ist und daß der Kolben (63) im Übertragerzylinder (61) zwei Dichtringe (64, 65) mit unterschiedlicher Spezifikation trägt, von denen der stellzylinderseitige Dichtring (65) an ein Übertragermedium, insbesondere Öl, und der hydraulikkreisseitige Dichtring (64) an Hydraulikflüssigkeit anpaßt ist.

## Claims

1. A hydraulic system used in a motor vehicle, comprising a primary hydraulic circuit with a pump (11) for generating a controlled pre-pressure to which there is connected at least one primary setting or servo cylinder (21, 23) which acts on force-actuated assemblies and a secondary hydraulic circuit (45, 47) which is connected to the primary hydraulic circuit and comprises pressure control valves (44, 46) and at least one secondary setting cylinder (41) with a piston (43) which acts on a friction coupling (71) in the driveline of a motor vehicle
**characterised in**
**that** the secondary hydraulic circuit (45, 47) comprises a pressure sensor (48, 49);
**that** the friction coupling (71) is an oil-filled multi-place coupling; and
**that** the hydraulic medium in the secondary hydraulic circuit is sealed via the piston (43) of the secondary setting cylinder (41) relative to the oil filling of the multi-plate coupling (71) or via a resilient membrane (67) arranged in the secondary setting cylinder (41) relative to a transmitter medium acting on the piston (43) of the secondary setting cylinder (41).

2. A hydraulic system used in a motor vehicle, comprising a primary hydraulic circuit with a pump (11) for generating a controlled pre-pressure to which there is connected at least one primary setting or servo cylinder (21, 23) which acts on force-actuated assemblies and a secondary hydraulic circuit (45, 47) which is connected to the primary hydraulic circuit and comprises pressure control valves (44, 46) and at least one secondary setting cylinder (41) with a piston (43) which acts on a friction coupling (71) in the driveline of a motor vehicle
**characterised in**
**that** the secondary hydraulic circuit (45, 47) comprises a pressure sensor (48, 49);
**that** the friction coupling (71) is an oil-filled multi-place coupling;
**that** a transmitter cylinder (61) is provided between the secondary hydraulic circuit and the secondary setting cylinder (41) and
**that** a piston (63) or a resilient membrane (69) in the transmitter cylinder (61) seals the hydraulic medium in the secondary hydraulic circuit relative to a transmitter medium acting on the piston (43) of the secondary setting cylinder (41).

3. A hydraulic system according to any one of claims 1 or 2,
**characterised in**
**that** the primary hydraulic circuit comprises vehicle brakes as force-actuated assemblies.

4. A hydraulic system according to any one of claims 1 or 2,
**characterised in**
**that** the primary hydraulic circuit comprises the switchable shafts of the manual gearbox of a motor vehicle as force-actuated assemblies.

5. A hydraulic system according to any one of claims 1 or 2,
**characterised in**
**that** the primary hydraulic circuit comprises setting members of an active chassis control system as force-actuated assemblies.

6. A hydraulic system according to any one of claims 1 or 2,
**characterised in**
**that** the primary hydraulic circuit comprises servo members of a vehicle steering box as force-actuated assemblies.

7. A hydraulic system according to any one of claims 1 to 6,
**characterised in**
**that** the friction coupling (71) is the locking coupling of a differential gearbox.

8. A hydraulic system according to any one of claims 1 to 6,
**characterised in**
**that** the friction coupling (71) is a hang-on coupling for an optionally drivable driving axle.

9. A hydraulic system according to any one of claims 1 to 8,
**characterised in**
**that** the sealing piston (43, 63) carries two groups of sealing rings (56, 57, 58, 59), respectively two sealing rings (64, 65) of different specifications which are each adapted to the existing medium.

10. A hydraulic system according to any one of claims 1 to 9,
**characterised in**
**that** the sealing piston is a stepped piston (63').

11. A hydraulic system according to any one of claims 1 to 10,
**characterised in**
**that** the transmitter medium is oil.

12. A hydraulic system according to any one of claims 1 to 11,
**characterised in**
**that** the resilient membrane (67, 69) consists of two layers with different specifications which are each adapted to the existing medium.

13. A hydraulic system according to claim 1,
**characterised in**
**that** the piston (43) in the setting cylinder (41) comprises two groups of sealing rings (56, 57, 58, 59) with different specifications of which the sealing rings at the coupling end are adapted to oil and the sealing rings at the hydraulic circuit end are adapted to a hydraulic fluid.

14. A hydraulic system according to claim 2,
**characterised in**
**that** the transmitter cylinder (61) is hydraulically connected to the setting cylinder (41) and that the piston (63) in the transmitter cylinder (61) carries two sealing rings (64, 65) with different specifications of which the sealing ring (65) at the setting cylinder end is adapted to a transmitter medium, more particularly oil, and the sealing ring (64) at the hydraulic circuit end is adapted to a hydraulic fluid.

## Revendications

1. Système hydraulique dans un véhicule automobile, comprenant un circuit hydraulique primaire avec une pompe (11), pour produire une pression primaire régulée, et auquel est raccordé au moins un cylindre primaire de réglage ou d'assistance (21, 23), qui agit sur des modules actionnés par une puissance externe, et un circuit hydraulique secondaire (45, 47) raccordé au circuit hydraulique primaire et comportant des vannes de régulation de pression (44, 46) et au moins un cylindre de réglage secondaire (41) avec un piston (43), qui agit sur un embrayage à friction (71) dans la ligne de transmission du véhicule automobile,
**caractérisé**
**en ce que** le circuit hydraulique secondaire (45, 47) comprend un capteur de pression (48, 49),
**en ce que** l'embrayage à friction (71) est un embrayage à disques rempli d'huile, et
**en ce que** le fluide hydraulique dans le circuit hydraulique secondaire est rendu étanche, par l'intermédiaire du piston (43) du cylindre de réglage secondaire (41), à l'encontre du remplissage d'huile de l'embrayage à disques (71), ou bien, par l'intermédiaire d'une membrane élastique (67) agencée dans le cylindre de réglage secondaire (41), à l'encontre d'un agent ou fluide de transfert agissant sur le piston (43) du cylindre de réglage secondaire (41).

2. Système hydraulique dans un véhicule automobile, comprenant un circuit hydraulique primaire avec une pompe (11), pour produire une pression primaire régulée, et auquel est raccordé au moins un cylindre primaire de réglage ou d'assistance (21, 23) qui agit sur des modules actionnés par une puissance extérieure, et un circuit hydraulique secondaire (45, 47) raccordé au circuit hydraulique primaire et comportant des vannes de régulation de pression (44, 46) et au moins un cylindre de réglage secondaire (41) avec un piston (43), qui agit sur un embrayage à friction (71) dans la ligne de transmission du véhicule automobile,
**caractérisé**
**en ce que** le circuit hydraulique secondaire (45, 47) comprend un capteur de pression (48, 49),
**en ce que** l'embrayage à friction (71) est un embrayage à disques rempli d'huile,
**en ce qu'**il est prévu un cylindre de transfert (61) entre le circuit hydraulique secondaire et le cylindre de réglage secondaire (41), et
**en ce qu'**un piston (63) ou une membrane élastique (69) dans le cylindre de transfert (61) assure l'étanchéité du fluide hydraulique dans le circuit hydraulique secondaire à l'encontre d'un agent ou fluide de transfert agissant sur le piston (43) du cylindre de réglage secondaire (41).

3. Système hydraulique selon l'une des revendications 1 ou 2,
**caractérisé**
**en ce que** le circuit hydraulique primaire comprend en guise de modules actionnés par une puissance externe, des freins de véhicule.

4. Système hydraulique selon l'une des revendications 1 ou 2,
**caractérisé**
**en ce que** le circuit hydraulique primaire comprend en guise de modules actionnés par une puissance externe, les arbres de commande d'une boite de vitesses à changement de rapports du véhicule.

5. Système hydraulique selon l'une des revendications 1 ou 2,
**caractérisé**
**en ce que** le circuit hydraulique primaire comprend en guise de modules actionnés par une puissance externe, des organes de réglage d'une suspension active de train de roulement de véhicule.

6. Système hydraulique selon l'une des revendications 1 ou 2,
**caractérisé**
**en ce que** le circuit hydraulique primaire comprend en guise de modules actionnés par une puissance externe, des organes d'assistance d'un système de transmission de direction du véhicule.

7. Système hydraulique selon l'une des revendications 1 à 6,
**caractérisé**
**en ce que** l'embrayage à friction (71) est constitué par l'embrayage de blocage d'une transmission à différentiel.

8. Système hydraulique selon l'une des revendications 1 à 6,
**caractérisé**
**en ce que** l'embrayage à friction (71) est constitué par l'embrayage d'enclenchement (embrayage dit hang-on) pour un essieu moteur pouvant être entraîné en cas de besoin.

9. Système hydraulique selon l'une des revendications 1 à 8,
**caractérisé**
**en ce que** le piston (43, 63) assurant l'étanchéité porte deux groupes de segments d'étanchéité (56, 57, 58, 59) respectivement deux segments d'étanchéité (64, 65) de spécifications différentes, qui sont adaptés respectivement au fluide ou à l'agent en regard.

10. Système hydraulique selon l'une des revendications 1 à 9,
**caractérisé**
**en ce que** le piston assurant l'étanchéité est un piston étagé (63').

11. Système hydraulique selon l'une des revendications 1 à 10,
**caractérisé**
**en ce que** l'agent ou le fluide de transfert est de l'huile.

12. Système hydraulique selon l'une des revendications 1 à 11,
**caractérisé**
**en ce que** la membrane élastique (67, 69) est constituée de deux couches de spécifications différentes, qui sont adaptées respectivement au fluide ou à l'agent en regard.

13. Système hydraulique selon la revendication 1,
**caractérisé**
**en ce que** le piston (43) dans le cylindre de réglage (41) porte deux groupes de segments d'étanchéité (56, 57, 58, 59) de spécifications différentes, dont les segments d'étanchéité situés du côté embrayage sont adaptés à l'huile et dont les segments d'étanchéité situés du côté du circuit hydraulique sont adaptés à du liquide hydraulique.

14. Système hydraulique selon la revendication 2,
**caractérisé**
**en ce que** le cylindre de transfert (61) est relié hydrauliquement au cylindre de réglage (41), et en ce que le piston (63) dans le cylindre de transfert (61) porte deux segments d'étanchéité (64, 65) de spécifications différentes, dont le segment d'étanchéité (65) situé du côté cylindre de réglage est adapté à l'agent ou fluide de transfert, notamment de l'huile, et dont le segment d'étanchéité (64) situé du côté du circuit hydraulique est adapté à du liquide hydraulique.
